# EUROPEAN PATENT APPLICATION

(11) **EP 2 924 834 A2**
(43) Date of publication of application: **30.09.2015**
(21) Application number: 15160592.0
(22) Date of filing: 24.03.2015
(51) Int. Cl.: H02G 3/32

(54) **CABLE CLIP**

(30) Priority: 28.03.2014 JP 2014067690
(71) Applicant: Nissei Metals Co. Ltd., Osaka 558-0014 (JP)
(72) Inventor: Aotani, Takashi, Osaka 558-0014 (JP)
(74) Representative: Beresford, Keith Denis Lewis

(57) **Abstract**

A cable clip formed simply by bending a piece of elastic wire, without requiring any subsequent polishing process, with reduced possibility of degrading in strength after long-term outdoor use. A cable clip 100 is an elastic wire bent into shape to fix a cable 600 to a flange 510 of an angle member 500, and includes at least one working portion 110 bent generally in an S-shape. In one embodiment a coupling portion 120 extends between a pair of working portions 110. The working portions 110 each have a first retainer 111 configured to contact a first face 511 of the flange 510, a second retainer 113 that is contiguous with the first retainer 111 via a first U-turn portion 112 and configured to contact a second face 512 of the flange 510, and a cable retainer 115 contiguous with the second retainer 113 via a second U-turn portion 114.

## Description

The invention relates to cable clips for holding cables on angle members, i.e. cable clips used for holding cables for interconnecting solar panels on a support structure to support the solar panels.

Installing solar panels require plenty of cables for interconnecting the solar panels. The cables must be held by a support structure to support the solar panels. An example of devices to hold cables in a support structure is a cable holder as disclosed in Japanese Patent No. 5126725.

This conventional cable holder includes a locking bracket of the elastic metal formed into a clip-like shape that has a generally U-shaped cross section. The cable holder also includes a bracket base to be fixed to a plate-like member. The bracket base is made of an elastic metal plate formed into a clip-like shape that has a generally U-shaped cross section (see paragraph [0025] of Japanese Patent No. 5126725).

Another example of a cable holder is the so-called tying bands or "cable ties" made of synthetic resin.

Cable holders such as one as described above formed by bending a metal plate may have burrs on the edge of the metal plate. This type of cable holders therefore should require a polishing process for removing the burrs. On the other hand, the so-called tying bands of synthetic resin may degrade in strength after long-term outdoor use, which may result in insufficient fixation of the cables.

The invention is devised under the circumstances to provide a cable clip that can be formed simply by bending a piece of elastic wire, without requiring any subsequent polishing process, with reduced possibility of degrading in strength after long-term outdoor use.

A cable clip of the invention is an elastic wire bent into shape and configured to hold a cable on a flange of an angle member and includes at least one working portion bent generally in an S-shape. The working portion includes a first retainer configured to contact a first face of the flange, a second retainer coupled to the first retainer via a first U-turn portion and configured to contact a second face of the flange, and a cable retainer coupled to the second retainer via a second U-turn portion.

Another cable clip of the invention is an elastic wire bent into shape and configured to hold a cable on a flange of an angle member and includes a pair of working portions bent generally into an S-shape and a coupling portion for coupling together the pair of working portion. The working portions each have a first retainer configured to contact a first face of the flange, a second retainer coupled to the first retainer via a first U-turn portion configured to contact a second face of the flange, and a cable retainer coupled to the second retainer via a second U-turn portion.

The cable clips of the invention are formed by bending a piece of elastic wire (for example, a piece of metal wire), not by bending a metal plate like conventional clips. Such conventional clips tend to have burrs, but the cable clips of the invention are free of burrs on their edges. Further, the cable clips free of burrs can obviate polishing processes that are essential for the conventional cable clips formed of a metal plate. This should also result in advantageously reduced costs.

Moreover, unlike the so-called tying bands of synthetic resin, the cable clips of the invention do not degrade in strength after long-term outdoor use, achieving stable fixation of cables.

Embodiments of the invention will now be described in detail, with reference to the accompanying drawings, in which:
Fig. 1 is a schematic perspective view of a cable clip of the first embodiment of the invention.
Fig. 2 is a schematic perspective view of the cable clip as fixing a cable to a flange of an angle member.
Fig. 3 is a schematic side view of the cable clip as attached to the flange of the angle member.
Fig. 4 is a schematic perspective view of a cable clip of the second embodiment of the invention.
Fig. 5 is a schematic perspective view of a cable clip of the third embodiment of the invention.
Fig. 6 is a schematic side view of the cable clip of the third embodiment of the invention.
Fig. 7 is a schematic perspective view of a cable clip of the fourth embodiment of the invention.

A cable clip 100 of the first embodiment of the invention can be used to fix a cable or cables 600 to a flange 510 of an angle member 500.

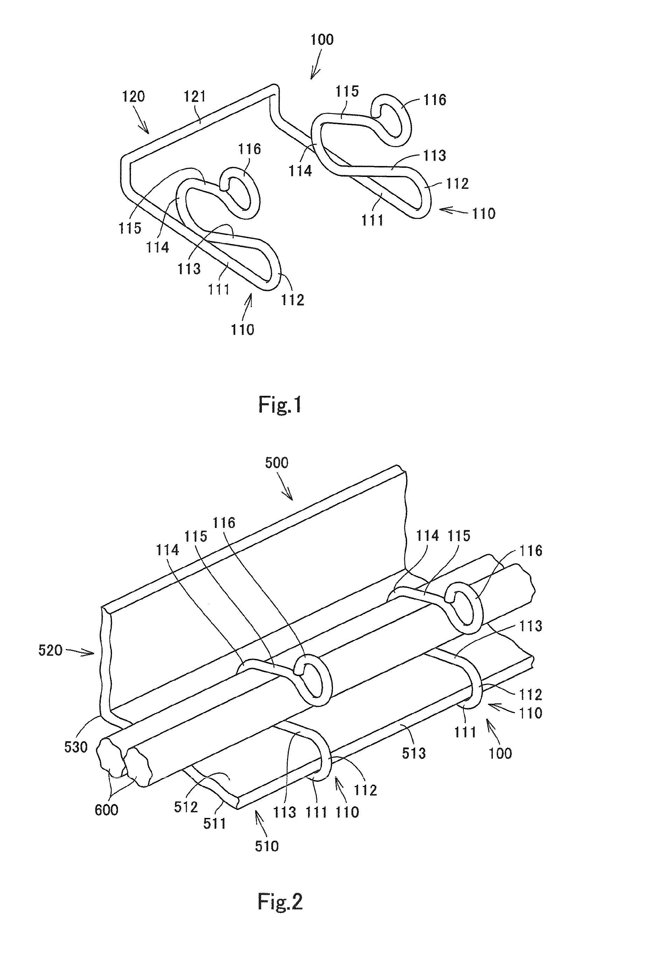

First, the angle member 500, to which the cable or cables 600 are to be fixed, will be described with reference to Fig. 2. A plurality of angle members 500 will be assembled in a matrix configuration to constitute a support structure for supporting solar panels (not shown). Each angle member 500 is an elongated member having an L-shaped cross-section, including a support portion 520 and a flange 510 joined together. The angle member 500 further includes a corner 530 where the flange 510 and the support portion 520 meet. A solar panel or panels will be placed on the support portion 520, while a cable or cables 600 for interconnecting the solar panels will be fixed to the flange 510. The flange 510 is has a first face 511, which is the outer face, a second face 512, which is the inner face, and an edge 513, which is located opposite to the corner 530.

Each cable clip 100 is constituted by an elastic wire, such as a metal wire, bent into shape. The cable clip 100 includes a pair of working portions 110 and a coupling portion 120 coupling together the working portions 110.

The working portions 110 are bent generally in S-shape. The working portions 110 have functions of fixing the cable clip 100 to the flange 510 of the angle member 500 and holding the cable(s) 600. The working portions 110 each include a first retainer 111 configured to contact the first face 511 of the flange 510, a second retainer 113 configured to contact the second face 512 of the flange 510, a first U-turn portion 112 contiguous with the first retainer 111 and the second retainer 113, a cable retainer 115, and a second U-turn portion 114 contiguous with the second retainer 113 and the cable retainer 115. The first retainer 111 is of linear shape and has a lengthwise first end contiguous with a first end of the first U-turn portion 112. The first U-turn portion 112 is curved generally in a C-shape. More particularly, the first U-turn portion 112 has a C-shaped curve of about 210 degrees relative to the first retainer 111. A second end of the first U-turn portion 112 is contiguous with a lengthwise first end of the second retainer 113 of linear shape. The second retainer 113 has a lengthwise second end (the end on the opposite side to the first U-turn portion 112), which is in contact with the inside of the first retainer 111 when the clip is unstressed. By "inside of the first retainer 111" is meant the side of each first retainer 111 facing the other first retainer 111.

The second end of the second retainer 113 is contiguous with a first end of the second U-turn portion 114. The second U-turn portion 114 is curved generally in a C-shape in an inverted orientation to the first U-turn portion 112. A second end of the second U-turn portion 114 is contiguous with a lengthwise first end of the cable retainer 115 of linear shape. The distance between the cable retainer 115 and the second retainer 113 is slightly smaller than the thickness of a cable 600, or the total thickness of the cables 600, to be held. The cable retainer 115 extends substantially in parallel to the second retainer 113. The distance between a lengthwise second end (the end on the opposite side to the second U-turn portion 114) of the cable retainer 115 and the first end of the second retainer 113 is smaller than the distance between the first end of the cable retainer 115 and the second end of the second retainer 113. This geometry can prevent the cable(s) 600 held between the second retainer 113 and the cable retainer 115 from dropping off easily.

Each working portion 110 further includes a circular portion 116 bent in a ring-like shape. The circular portion 116 is contiguous with the second end of the cable retainer. The circular portion 116 serves to prevent an inadvertent damage on a cable or cables 600 when clipping the cable or cables between the second retainers 113 and the cable retainers 115.

The cable clip 100 of this embodiment of the invention includes the pair of working portions 110 configured as described above. The pair of working portions 110 extend in parallel to each other and are coupled by the coupling portion 120. Specifically, a lengthwise second end of the first retainer 111 of each working portion 110 (the basal end of each working portion 110) is contiguous with the coupling portion 120 (first coupling portion).

The coupling portion 120 is located at the second end side of the first retainer 111 of each working portion 110 (the opposite side to each first U-turn portion 112). The coupling portion 120 serves to couple between the pair of working portions 110 and also to fix the cable clip 100 to the flange 510. For the purpose of fixation, the coupling portion 120 has a locking portion 121.

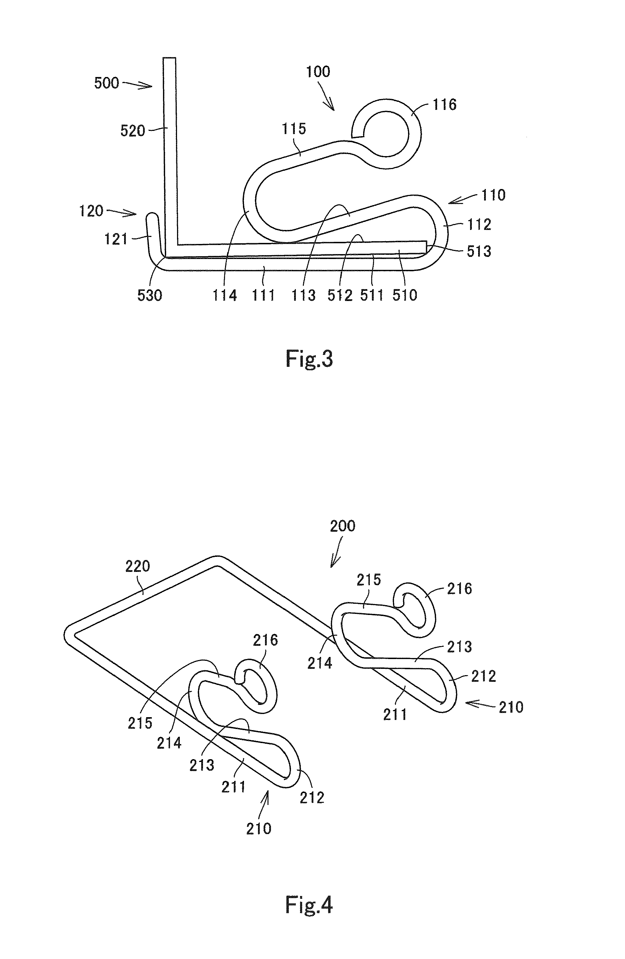

As shown in Fig. 2 and Fig. 3, the first retainer 111 has a lengthwise dimension that is substantially equal to the widthwise dimension of the flange 510 to fix with the first retainer 111. By "widthwise dimension of the flange 510" is meant the dimension of the flange 510 along length of the first retainer 111. The locking portion 121 is bent by about 90 degrees relative to the first retainers 111, which makes it possible to lock the locking portion 121 against the support portion 520, which extends substantially orthogonal to the flange 510. In other words, the locking portion 121 is bent into a shape conforming to the corner 530 of the angle member 500.

The cable clip 100 configured as described above can be attached to the flange 510 by making the pair of working portions 110 hold the flange 510 as shown in Fig. 2 and Fig. 3. Specifically, each working portion 110 holds the flange 510 between the first retainer 111 and the second retainer 113, with the first retainer 111 in contact with the first face 511 of the flange 510 and the second retainer 113 pressed into contact with the second face 512 of the flange 510 by elastic deformation of the cable clip. It should be ensured that the edge 513 of the flange 510 is in contact with the insides of the first U-turn portions 112 of the working portions 110.

When the edge 513 of the flange 510 is brought into contact with the insides of the first U-turn portions 112, the locking portion 121 of the coupling portion 120 abuts against the corner 530 of the angle member 500. In other words, the first U-turn portions 112 are in contact with the edge 513 (the edge opposite to the corner 530) of the flange 510, while the locking portions 121 are in contact with the corner 530 of the angle member 500.

In the cable clip 100 thus attached to the angle member 500, there are some spaces between the second retainers 113 and the cable retainers 115 of the working portions 110. A cable or cables 600 can be pressed into these spaces so that the cable or cables 600 are held securely between the second retainers 113 and the cable retainers 115 of the working portions 110 by elastic deformation of the cable clip. The cable clip 100 thus serves to attach a cable or cables 600 to the angle member 500.

It should be noted that the cable clip 100 illustrated in Fig. 2 holds two cables 600. However, by changing the lengths of the second retainers 113 and the cable retainers 115, the cable clip 100 may be modified so as to hold a single cable 600 or a different number of cables 600.

Fig. 4 shows a cable clip 200 of a second embodiment of the invention. The cable clip 200 is an elastic wire, such as a metal wire, bent into shape and can be used to fix a cable or cables 600 to a flange 510 of an angle member 500.

The cable clip 200 has a coupling portion 220 (first coupling portion) of a different shape from that of the cable clip 100 of the first embodiment. Specifically, the coupling portion 220 of the cable clip 200 is straight in shape and includes no portion corresponding to the locking portion 121 of the coupling portion 120 of the cable clip 100 of the first embodiment.

Except for the coupling portion 220, the cable clip 200 of the second embodiment has the same configuration as the cable clip 100 of the first embodiment. Accordingly, descriptions of the cable clip 200 overlapping with those of the cable clip 100 will not be repeated.

The cable clip 200 includes a pair of working portions 210 and a coupling portion 220. The working portions 210 each have a first retainer 211, a first U-turn portion 212, a second retainer 213, a second U-turn portion 214, a cable retainer 215, and a circular portion 216.

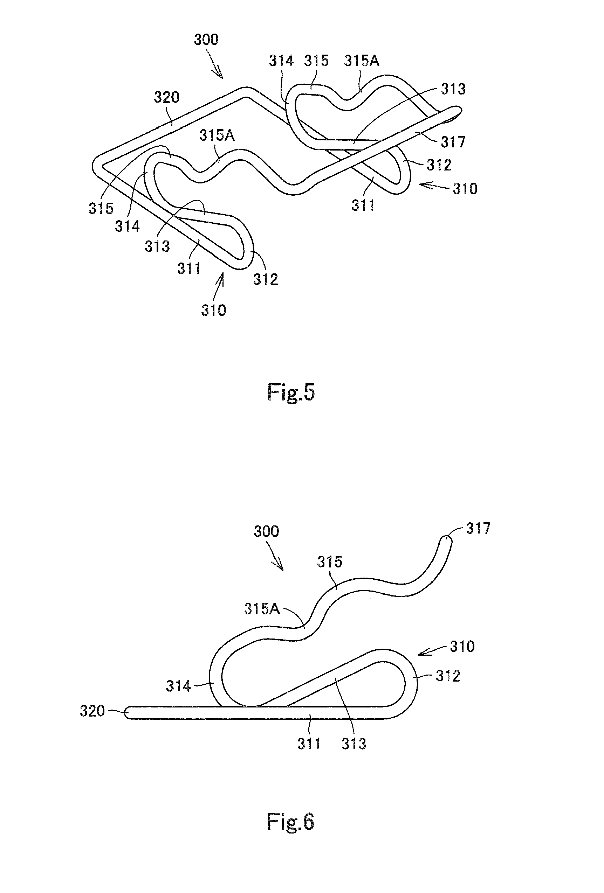

Fig. 5 and Fig. 6 show a cable clip 300 of the third embodiment of the invention. The cable clip 300 is an elastic wire, such as a metal wire, bent into shape and can be used to fix a cable or cables 600 to a flange 510 of an angle member 500.

The cable clip 300 of the third embodiment is different from the cable clip 200 of the second embodiment in that a pair of working portions 310 is coupled together at their distal ends, and that cable retainers 315 of the working portions 310 each have a contact portion 315A.

The distal ends of the pair of working portions 310 (i.e. second lengthwise ends of cable retainers 315) are coupled by a distal coupling portion 317 (second coupling portion) extending parallel to the connecting portion 320 (first coupling portion). As the working portions 310 are coupled by the distal coupling portion 317, it is possible to reduce the possibility of undesirable lateral deformation of the working portions 310. This gives an advantage of holding the cable(s) 600 more reliably. Further advantageously, the working portions 310 coupled by the distal coupling portion 317 will not inadvertently damage a cable or cables 600 when clipping the cable(s) between the second retainers 313 and the cable retainers 115. Accordingly, there is no need to provide circular portions like the circular portions 116 or 216 at the second ends of the cable retainers 115 or 215 of the cable clip 100 or 200 of the first or second embodiment.

The contact portions 315A each have alternating two concave portions and two convex portions. The convex portions project toward the second retainers 313. The cable retainers 315 including the contact portions 315A can hold the cable(s) 600 more reliably because the convex portions of the contact portions 315A can suppress lateral movement of the cable(s) 600.

The cable clip 300 of the third embodiment has the same configuration as that of the cable clip 200 of the second embodiment, except that the pair of working portions 310 is coupled by the distal coupling portion 317, and that the cable retainers 315 each have the contact portion 315A. Accordingly, some descriptions of the cable clip 300 overlapping with those of the cable clip 200 will be omitted.

The cable clip 300 includes the pair of working portions 310 and the connecting portion 320. The working portions 310 each include a first retainer 311, a first U-turn portion 312, a second retainer 313, a second U-turn portion 314, and a cable retainer 315.

It should be appreciated that the cable clips 100, 200, and 300 described above each have the pair of working portions 110, 210, and 310, respectively, but the invention is not limited to these embodiments.

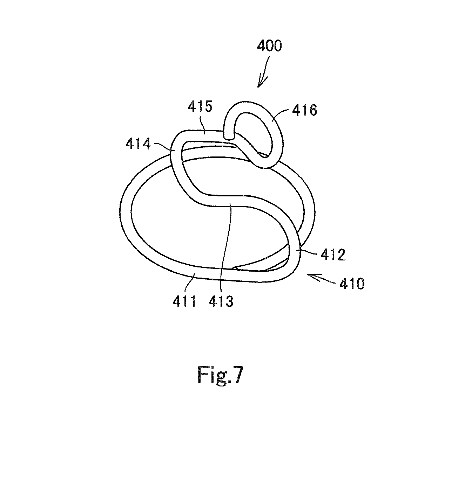

For example, Fig. 7 illustrates a cable clip 400 of the fourth embodiment of the invention, which is different from the cable clip 100 of the first embodiment in that a single working portion 410 is provided, and that a part of the first retainer 411 includes a portion generally in the form of a loop. Except for these, the cable clip 400 has the substantially same configuration as a working portion 110 of the cable clip 100 of the first embodiment.

The cable clip 400 is an elastic wire, such as a metal wire, bent into shape and can be used to fix a cable or cables 600 to a flange 510 of an angle member 500. The cable clip 400 includes the working portion 410, which includes the first retainer 411, a first U-turn portion 412, a second retainer 413, a second U-turn portion 414, a cable retainer 415, and a circular portion 416.

The first retainer 411 has a generally looped portion and a straight portion extending outwardly from the looped portion. When viewed from above, the portions of the working portion 410 other than the first retainer 411 (namely, the first U-turn portion 412, the second retainer 413, the second U-turn portion 414, the cable retainer 415, and the circular portion 416) are arranged in the extending direction of the straight portion of the first retainer 411. The second retainer 413 is opposed to the straight portion of the first retainer 411 with a clearance therebetween. The cable retainer 415 is opposed to the second retainer 413 with a clearance therebetween. Accordingly, the cable clip 400 can be securely attached to the flange 510 by clipping the flange 510 of the angle member 500 between the first retainer 411 and the second retainer 413, such that the circular looped portion of the first retainer 411 engages one face of the flange 510, and the second retainer 413 engages the other face of the flange at a point opposite the area bounded by the first retainer 411.

A cable or cables 600 can be attached to the angle member 500 by pressing the cable(s) 600 into the space between the second retainer 413 and the cable retainer 415.

It should be noted that the cable clip 400 has only one working portion 410 but can serve to attach the cable(s) 600 securely to the angle member 500. Further advantageously, the cable clip 400 can be attached to a curved portion, if any, of the angle member 500 so that the cable(s) 600 can be bent along the curved portion of the angle member 500.

## Claims

1. A cable clip (100, 200, 300, 400) for holding a cable (600) on a flange (510) of an angle member (500),
the cable clip being an elastic wire bent into shape and comprising at least one working portion (110, 210, 310, 410), the at least one working portion being bent generally in an S-shape and including:
a first retainer (111, 211, 311, 411), configured to contact a first face (511) of the flange;
a second retainer (113, 213, 313, 413), configured to contact a second face (512) of the flange;
a first U-turn portion (112, 212, 312, 412), contiguous with the first retainer and the second retainer;
a cable retainer (115, 215, 315, 415); and
a second U-turn portion (114, 214, 314, 414), contiguous with the second retainer and the cable retainer.

2. A cable clip (400) according to claim 1, wherein the first retainer (411) includes a generally loop-shaped portion.

3. A cable clip (100, 200, 300) according to claim 1, wherein
the at least one working portion (110, 210, 310) comprises a pair of working portions, and
the cable clip further comprises a first coupling portion (120, 220, 320) configured to couple between the pair of working portions.

4. A cable clip (100) according to claim 3 for holding a cable (600) on a flange (510) of an angle member (500) which includes said flange (510), a support portion (520), and a corner (530) where the support portion and the flange meet, wherein:
the first coupling portion (120) includes a locking portion (121), the locking portion having a shape corresponding to the corner of the angle member.

5. A cable clip (100) according to claim 3 for holding a cable (600) on a flange (510) of an angle member (500) which includes said flange (510), a support portion (520), and a corner (530) where the support portion and the flange meet, and the flange including an edge (513) on an opposite side to the corner, wherein:
the first coupling portion (120) includes a locking portion (121), the locking portion being contactable with the corner of the angle member, and
the first U-turn portions (112) of the pair of working portions (110) are contactable with the edge of the flange.

6. A cable clip (100, 200, 300) according to any one of claims 3 to 5, wherein
the second retainers (113, 213, 313) have ends on an opposite side to the first U-turn portions (112, 212, 312), the ends being in contact with associated insides of the first retainers (111, 211, 311).

7. A cable clip (300) according to any one of claims 3 to 5, further comprising a second connecting portion (317) configured to couple between distal ends of the pair of working portions (310).

8. A cable clip (300) according to claim 1, wherein
the cable retainer (315) has a convex portion (315A) protruding toward the second retainer.

9. A cable clip (100, 200, 300, 400) according to any one of claims 1 to 8, wherein
the first retainer (111, 211, 311, 411) includes a first end,
the second retainer (113, 213, 313, 413) includes a first end and a second end,
the cable retainer (115, 215, 315, 415) includes a first end,
the first U-turn portion (112, 212, 312, 412) includes a first end, connected to the first end of the first retainer, and a second end, connected to the first end of the second retainer,
the second U-turn portion (114, 214, 314, 414) is curved in an inverted orientation to the first U-turn portion and includes a first end, connected to the second end of the second retainer, and a second end, connected to the first end of the cable retainer.
